# EUROPÄISCHE PATENTANMELDUNG

(11) **EP 3 440 959 A1**
(43) Veröffentlichungstag der Anmeldung: **13.02.2019**
(21) Anmeldenummer: 18186217.8
(22) Anmeldetag: 30.07.2018
(51) Int. Cl.: A47B 13/08, A47J 37/07, A47B 37/04, A47B 87/00, A47B 91/00

(54) **TISCH FÜR DEN AUSSENBEREICH**

(30) Priorität: 08.08.2017 DE 102017117997
(71) Anmelder: Michael, Noack, 66482 Zweibrücken (DE)
(72) Erfinder: Michael, Noack, 66482 Zweibrücken (DE)
(74) Vertreter: Patentanwälte Bernhardt / Wolff Partnerschaft mbB

(57) **Zusammenfassung**

Die Erfindung betrifft einen Tisch für den Außenbereich, der mit einem Grillgerät (6) kombinierbar ist und eine auf einem Boden (1) aufgeständerte Tischplatte (2) mit einer zentralen Ausnehmung (5) für die Anordnung des Grillgerätes (6) aufweist. Erfindungsgemäß umfasst der Tisch mehrere Teile (9,9'), die unter Umschließung des sich durch die Ausnehmung erstreckenden Grillgerätes zusammenfügbar und unter Freigabe des Grillgerätes (6) voneinander lösbar sind. Vorzugsweise handelt es sich bei dem Grillgerät um ein sich vom Boden erstreckendes Standgrillgerät.

## Beschreibung

Die Erfindung betrifft einen Tisch für den Außenbereich, der mit einem Grillgerät kombinierbar ist und eine auf einem Boden aufgeständerte Tischplatte mit einer zentralen Ausnehmung für die Anordnung des Grillgeräts aufweist.

Durch Benutzung sind derartige Tische bekannt, in die ein Grillgerät integriert ist, das gleichzeitig von mehreren an dem Tisch sitzenden Personen bedient und individuell zur Zubereitung von Grillgut genutzt werden kann.

Der Erfindung liegt die Aufgabe zugrunde, einen neuen Tisch für den Außenbereich zu schaffen, der mit einem Grillgerät kombinierbar ist und eine von der Kombination mit dem Tisch unabhängige Nutzung des Grillgeräts auf bequeme Weise ermöglicht.

Der diese Aufgabe lösende Tisch nach der Erfindung ist dadurch gekennzeichnet, dass er mehrere Teile umfasst, die unter Umschließung des sich durch die Ausnehmung hindurch erstreckenden Grillgerätes zusammenfügbar und unter Freigabe des Grillgerätes voneinander lösbar sind.

Vorteilhaft lässt sich gemäß der Erfindung durch Zerlegung des Tisches in seine Teile auf bequeme Weise eine Trennung von Grillgerät und Tisch erreichen und das Grillgerät isoliert nutzen.

In einer besonders bevorzugten Ausführungsform der Erfindung handelt es sich bei dem Grillgerät um ein sich vom Boden erstreckendes Standgrillgerät, insbesondere ein Kugelgrillgerät. Vorteilhaft ist bei letzterem unkontrollierter Funkenflug unter der Tischplatte vermieden.

In bevorzugten Ausführungsformen der Erfindung ist die Tischplatte kreisrund oder quadratisch. An einer kreisrunden Tischplatte können alle dort Platz findenden Personen den gleichen Abstand zum Grillrost einnehmen. An einem quadratischen Tisch können zur Platzierung von Personen ungeeignete Eckenbereiche der Tischplatte als Ablageflächen genutzt werden.

Wie die Tischplatte ist vorzugsweise auch die zentrale Ausnehmung kreisrund oder quadratisch ausgebildet.

In einer weiteren bevorzugten Ausführungsform der Erfindung handelt es sich bei den zusammenfügbaren Teilen um Hälftenteile des Tisches oder der Tischplatte. Es versteht sich, dass solche Hälftenteile ein an gewünschter Stelle platziertes Grillgerät umschließen können. Alternativ zu den Hälftenteilen können die zusammenfügbaren Teile ein zur Bildung eines Zugangs zu dem Grillgerät aus der Tischplatte ausziehbares oder/und ausschwenkbares Element umfassen.

Bei dem Element handelt es sich z.B. um einen Schieber, der sich radial in die Tischplatte einschieben bzw. aus der Tischplatte herausziehen lässt und vorzugsweise ohne Verbindung zu einem Ständerelement des Tisches nur einen Teil der Tischplatte bildet.

In weiterer Ausgestaltung der Erfindung umfassen die zusammenfügbaren Teile Verbindungselemente zur lösbaren Verbindung der Teile nach deren Zusammenfügung.

Vorzugsweise sind die zusammenfügbaren Teile auf Rollen, insbesondere arretierbaren Rollen, bewegbar. Das betrifft insbesondere die Hälftenteile, wobei jedes Hälftenteil ein vollständiges Tischbein und zwei Tischbeinhälftenteile aufweisen kann. Im zusammengefügten Zustand des Tisches bilden die Tischbeinhälftenteile dann jeweils ein vollständiges Tischbein. Jedes der Hälftenteile des Tisches ist für sich standfähig.

In einer weiteren Ausführungsform der Erfindung weist die Tischplatte angrenzend an die zentrale Ausnehmung eine schützende Einlage auf, z.B. eine Einlage aus Edelstahlblech, die sich leicht und gründlich säubern lässt. Der durch tropfendes Fett vorrangig verschmutzte Innenrandbereich der Tischplatte lässt sich so leichter pflegen.

Es versteht sich, dass der Tisch nach der Erfindung statt mit einem Grillgerät z.B. auch mit einem Sonnenschirm oder Heizgerät kombinierbar wäre.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: einen erfindungsgemäßen Tisch kombiniert mit einem Kugelgrillgerät in einer Draufsicht,
- Fig. 2: den Tisch von Fig. 1 in einer Seitenansicht, und
- Fig. 3 bis 5: weitere Ausführungsbeispiele für Tische nach der Erfindung jeweils in einer Draufsicht.

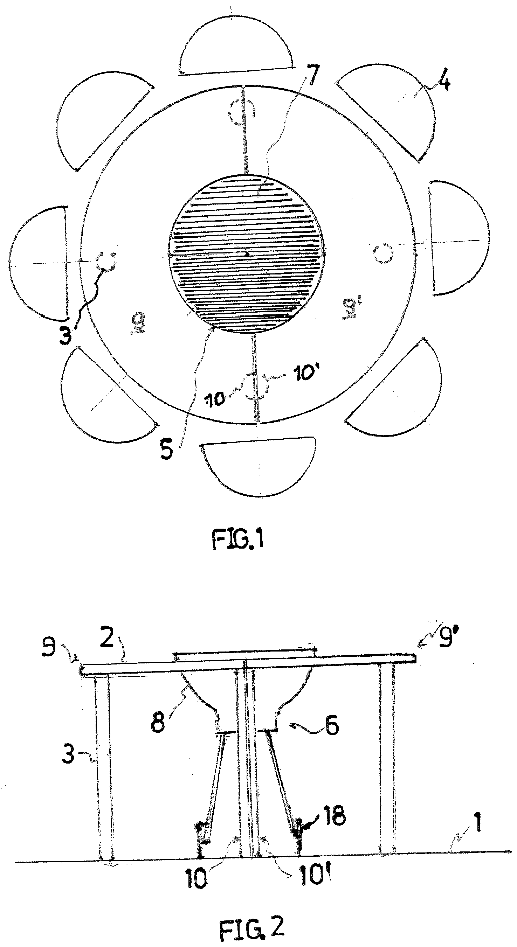

Ein Esstisch für den Außenbereich, insbesondere zur Aufstellung auf einem Terrassenboden 1, weist in dem in Fig. 1 und 2 gezeigten Beispiel eine kreisrunde Tischplatte 2 und vier Tischbeine 3 auf. Um den Tisch herum sind Sitze 4 für acht Personen aufgestellt.

Durch eine zentrale Ausnehmung 5 in der Tischplatte 2 hindurch ragt ein auf dem Terrassenboden 1 aufgestelltes Kugelgrillgerät 6, dessen Kugelbehälter 8 unterhalb eines Grillrosts 7 von der Tischplatte 2 vollständig umschlossen ist.

Der Tisch besteht in dem gezeigten Beispiel aus Hälftenteilen 9,9', die durch (nicht gezeigte) Verbindungsmittel, z.B. Schnapphebel umfassende Verbindungsmittel, zusammengehalten werden. Die Hälftenteile 9,9' umfassen jeweils zwei Tischbeinhälften 10 bzw. 10', so dass jedes der Hälftenteile 9,9' dreifach durch ein vollständiges Tischbein 3 und je zwei Tischbeinhälften 10 bzw. 10' für sich stehfähig abgestützt ist.

Bei der Beschickung des Kugelgrillgerätes 6 mit Grillkohle und der Zubereitung eines über eine längere Grillphase nutzbaren Glutbetts können die Hälftenteile 9,9' von dem Kugelgrillgerät 6 entfernt sein, so dass das Kugelgrillgerät 6 frei zugänglich ist. Nach Abschluss solcher Vorbereitungen lassen sich Tisch und Kugelgrillgerät dann in der in den Figuren 1 und 2 gezeigten Weise zusammenführen. Vorteilhaft ist das Kugelgrillgerät 6 auf dem Terrassenboden 1 mittels Rollen 18 verfahrbar. Auch die Tischbeine 3 könnten mit Rollen, insbesondere arretierbaren Rollen, versehen sein, welche den Transport der Hälftenteile 9,9' auf dem Terrassenboden 1 erheblich erleichtern.

Der Abstand zwischen dem Außenrand der Tischplatte 2 und dem Grillrost 7 ist so bemessen, dass sich Grillgut auf dem Grillrost 7 durch am Tisch sitzende Personen bequem mit Hilfe einer Grillzange handhaben lässt. Jeder Teilnehmer der Tischrunde kann ähnlich einem Fondue Grillgut nach Bedarf selbst zubereiten. Die Einbeziehung sämtlicher Teilnehmer in das Grillgeschehen fördert erheblich die Geselligkeit und macht das Grillen zu einem besonderen Erlebnis.

Es versteht sich, dass die Tischplatte von der Kreisform abweichen und z.B. quadratisch sein kann. Im letzteren Fall wäre die Zahl der am Tisch Platz findenden Teilnehmer zwar geringer, die Eckenbereiche des Tisches ließen sich dafür aber vorteilhaft als Ablageflächen nutzen, z.B. für Saucen, Gewürze und noch zuzubereitendes oder bereits zubereitetes Grillgut.

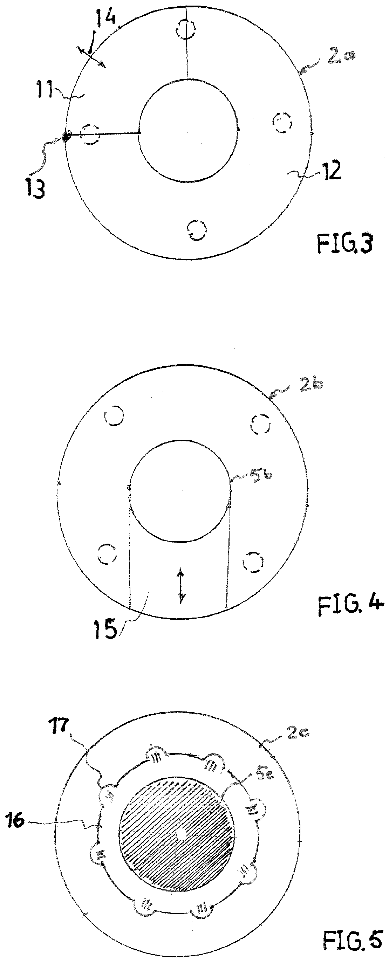

Fig. 3 und 4 zeigen Ausführungsbeispiele für Tische, die abweichend von dem Ausführungsbeispiel von Fig. 1 und 2 keine Hälftenteile umfassen. Fig. 3 zeigt einen Tisch mit einer Tischplatte 2a, die aus Teilstücken 11 und 12 besteht, von denen sich das Teilstück 11 über einen Viertelkreis und das Teilstück 12 über einen Dreiviertelkreis erstreckt. Das sich über einen Viertelkreis erstreckende Teilstück 11 ist um ein Gelenk 13 gemäß Doppelpfeil 14 aus- und einschwenkbar. Bei ausgeschwenktem Teilstück 11 könnte ein Grillgerät eingeschoben werden, das von der Tischplatte 2a nach Rückschwenkung des Teilstücks 11 vollständig umschlossen ist.

Fig. 4 zeigt einen Tisch mit einer Tischplatte 2b, in der ein als Schieber 15 ausgebildetes Teilstück angeordnet ist. Die Breite des Schiebers 15 senkrecht zur Schubrichtung ist gleich dem Durchmesser einer zentralen Ausnehmung 5b in der Tischplatte 2b. Wie zu sehen ist, weist der Schieber 15 keine Verbindung mit einem Tischbein auf, so dass er sich bequem handhaben lässt.

Die Ausführungsbeispiele von Fig. 3 und 4 sind vorteilhaft vor allem dann einsetzbar, wenn während des Grillgeschehens öfter freier Zugang zum Grillgerät geschaffen werden muss.

Fig. 5 zeigt einen Tisch mit einer Tischplatte 2c, in die angrenzend an eine zentrale Öffnung 5c eine Ringeinlage 16 aus Edelstahlblech eingearbeitet ist. Der besonderer Verschmutzung durch tropfendes Fett unterliegende Innenrandbereich der Tischplatte 2c lässt sich auf diese Weise leicht und gründlich säubern und so die Ansehnlichkeit des Tisches über lange Zeit erhalten.

Ausbuchtungen 17 der Edelstahlblecheinlage 16 bilden Ablageflächen, insbesondere für eine dem betreffenden Sitz 4 zugeordnete Grillzange.

## Patentansprüche

1. Tisch für den Außenbereich, der mit einem Grillgerät (6) kombinierbar ist und eine auf einem Boden (1) aufgeständerte Tischplatte (2) mit einer zentralen Ausnehmung (5) für die Anordnung des Grillgerätes aufweist,
**dadurch gekennzeichnet,**
**dass** der Tisch mehrere Teile (,9,') umfasst, die unter Umschließung des sich durch die Ausnehmung (5) hindurch erstreckenden Grillgerätes (6) zusammenfügbar und unter Freigabe des Grillgerätes (6) voneinander lösbar sind.

2. Tisch nach Anspruch 1,
**dadurch gekennzeichnet,**
**dass** das Grillgerät ein sich von dem Boden (1) erstreckendes Standgrillgerät, insbesondere Kugelgrillgerät (6), ist.

3. Tisch nach Anspruch 1 oder 2,
**dadurch gekennzeichnet,**
**dass** die Tischplatte (2) kreisrund oder quadratisch ist.

4. Tisch nach einem der Ansprüche 1 bis 3,
**dadurch gekennzeichnet,**
**dass** die zentrale Ausnehmung (5) kreisrund oder quadratisch ist.

5. Tisch nach einem der Ansprüche 1 bis 4,
**dadurch gekennzeichnet,**
**dass** die zusammenfügbaren Teile Hälftenteile (9,9') des Tisches oder/und der Tischplatte (2) umfassen.

6. Tisch nach einem der Ansprüche 1 bis 5,
**dadurch gekennzeichnet,**
**dass** die zusammenfügbaren Teile ein in die Tischplatte (2) einfügbares und zur Bildung eines Zugangs abschwenk- oder ausziehbares Element umfassen.

7. Tisch nach einem der Ansprüche 1 bis 6,
**dadurch gekennzeichnet,**
**dass** die zusammenfügbaren Teile Verbindungselemente zum Zusammenhalten der Teile nach Zusammenfügung umfassen.

8. Tisch nach einem der Ansprüche 1 bis 7,
**dadurch gekennzeichnet,**
**dass** die zusammenfügbaren Teile auf Rollen, insbesondere arretierbaren Rollen, bewegbar sind.

9. Tisch nach einem der Ansprüche 6 bis 8,
**dadurch gekennzeichnet,**
**dass** das Element als Schieber (15) oder ausschwenkbares Segment ausgebildet ist.

10. Tisch nach Anspruch 9,
**dadurch gekennzeichnet,**
**dass** der Schieber (15) ausschließlich einen Teil der Tischplatte (2) umfasst.

11. Tisch nach einem der Ansprüche 1 bis 10,
**dadurch gekennzeichnet,**
**dass** die Tischplatte angrenzend an die zentrale Ausnehmung eine schützende Einlage aufweist.
